# EUROPÄISCHE PATENTANMELDUNG

(11) **EP 4 818 009 A1**
(43) Veröffentlichungstag der Anmeldung: **07.10.2026**
(21) Anmeldenummer: 25167524.5
(22) Anmeldetag: 31.03.2025
(51) Int. Cl.: B62D 53/00, B62D 55/06, B25J 3/00, B62D 53/06, B62D 53/08

(54) **SET ZUM AUTONOMEN TRANSPORT VON STÜCKGUT**

(71) Anmelder: EVG Entwicklungs- u. Verwertungs- Gesellschaft m.b.H., 8074 Raaba (AT)
(72) Erfinder: Droschl, Georg, 8442 Kitzeck im Sausal (AT); Baci, Andreas, 8076 Vasoldsberg (AT); Kügerl, Thomas, 8511 St. Stefan ob Stainz (AT)
(74) Vertreter: Wirnsberger & Lerchbaum Patentanwälte OG

(57) **Zusammenfassung**

Die Erfindung betrifft ein Set (1) aus einem Roboterfahrzeug (2), welches für einen autonomen Betrieb eingerichtet ist, und einer verfahrbaren Transporteinrichtung (6) zum Transportieren von Lasten wie Stückgut (10). Um Stückgut (10) auch bei Fahrbahnunebenheiten autonom transportieren zu können, ist erfindungsgemäß vorgesehen, dass das Roboterfahrzeug (2) mit einem Raupenantrieb (3) ausgebildet ist und eine Adaptereinrichtung (5) für die Transporteinrichtung (6) aufweist und die Transporteinrichtung (6) mit einer bodenseitigen Aufnahme (11) für die Adaptereinrichtung (5) ausgebildet ist, wobei die Aufnahme (11) dazu eingerichtet ist, die Adaptereinrichtung (5) gelenkig aufzunehmen.

## Beschreibung

Die Erfindung betrifft ein Set aus einem Roboterfahrzeug, welches für einen autonomen Betrieb eingerichtet ist, und einer verfahrbaren Transporteinrichtung zum Transportieren von Lasten wie Stückgut.

Bei der Herstellung von Produkten ist es ein stetiger Trend, nach Möglichkeit einzelne Prozessschritte weitgehend zu automatisieren. Dadurch können manuelle Tätigkeiten oder Eingriffe minimiert werden. Dies bietet nicht nur den Vorteil, dass weniger Personal erforderlich ist, sondern auch, dass Fehlerquellen durch menschliches Eingreifen reduziert werden können.

In diesem Zusammenhang ist es aus dem Stand der Technik bekannt, für logistische Aufgaben autonom fahrende Fahrzeuge einzusetzen, welche Lasten an einem ersten Ort aufnehmen und an einem zweiten Ort abgeben. Entsprechende Fahrzeuge sind in der Regel mit Antriebsrädern ausgerüstet. Sofern größere Gegenstände zu bewegen sind, sehen Transportlösungen hierfür gesonderte Transporteinrichtungen wie Transportwagen oder dergleichen vor, die mit einem autonom fahrenden Roboterfahrzeug für den Transport verbunden werden. Ein zum Transport des Transportwagens als Lastaufnahmemittel sowie des Roboterfahrzeuges erforderliches Antriebsmoment erfolgt über die Antriebsräder des Roboterfahrzeuges. Konstruktionsbedingt weisen diese Antriebsräder der Roboterfahrzeuge zumeist einen kleinen Durchmesser auf, da die Roboterfahrzeuge die Transporteinrichtungen unterfahren können sollen. Dies führt allerdings dazu, dass bereits kleinere Fahrbahnunebenheiten oder andere Hindernisse dazu führen können, dass das autonom fahrende Roboterfahrzeug diese nicht überwinden kann und somit stehen bleibt. Ein anderer wesentlicher Faktor zum Lastentransport ist auch eine Neigung der Fahrbahn. Eine Reibung zwischen Antriebsrädern und Fahrbahn muss ausreichend sein, um ein Lastaufnahmemittel beschleunigen zu können.

Ein anderer Nachteil des Standes der Technik ist eine Ausführung der Lastaufnahmemittel. Eine Mitnahme erfolgt großteils über autonome Mitnahmemittel, die am Lastaufnahmemittel ein- bzw. ausgekoppelt werden. Die Lastaufnahmemittel sind am Boden abgestützt, was in der Regel mit fixen oder drehbaren Schwerlastrollen realisiert wird. Derartige Schwerlastrollen haben allerdings auch den Nachteil, dass für einen reibungslosen Betrieb eine hochwertige Fahrbahn benötigt wird, welche ein hohes Maß an Ebenheit und keine Hindernisse aufweist.

Ein anderer Nachteil besteht darin, dass automatische Mitnahmeelemente, beispielsweise in Form von Mitnehmerzapfen oder Anhängekupplungen, noch nicht ausreichend ausgereift und etabliert sind, sodass manuelle Eingriffe notwendig sind, um eine Kopplung eines Lastaufnahmemittels wie einer Transporteinrichtung mit einem autonom fahrenden Roboterfahrzeug zu erreichen. Dadurch gehen die an sich gegebenen Vorteile eines autonom fahrenden Roboterfahrzeuges zu einem wesentlichen Teil verloren.

Hier setzt die Erfindung an. Aufgabe der Erfindung ist es, ein Set der eingangs genannten Art bereitzustellen, mit welchem die Probleme des Standes der Technik vermieden oder zumindest verringert sind. Insbesondere soll ein Set bereitgestellt werden, welches es ermöglicht, Lasten wie Stückgut mit einer Transporteinrichtung auch ohne manuellen Eingriff transportieren zu können, wenn eine Fahrbahn Unebenheiten aufweist.

Die Aufgabe der Erfindung wird gelöst, wenn bei einem Set der eingangs genannten Art das Roboterfahrzeug mit einem Raupenantrieb ausgebildet ist und eine Adaptereinrichtung für die Transporteinrichtung aufweist und die Transporteinrichtung mit einer bodenseitigen Aufnahme für die Adaptereinrichtung ausgebildet ist, wobei die Aufnahme dazu eingerichtet ist, die Adaptereinrichtung gelenkig aufzunehmen.

Ein mit der Erfindung erzielter Vorteil ist insbesondere darin zu sehen, dass mit dem Set Lasten, insbesondere Stückgut aus Draht oder Drahtverbunden, somit relativ schwere Lasten, transportiert werden können, und zwar auch dann, wenn die Fahrbahnverhältnisse in einer Produktionsstätte Stufen oder erhebliche Steigungen aufweisen. Da die Transporteinrichtung eine bodenseitige Aufnahme für die Adaptereinrichtung aufweist, welche am Roboterfahrzeug angeordnet ist, kann das Roboterfahrzeug unter die Transporteinrichtung für das Stückgut fahren, dort positioniert werden und durch Kopplung der Adaptereinrichtung mit der Aufnahme die Transporteinrichtung anschließen. Mit dem Anschließen der Transporteinrichtung kann diese dann über ein Verfahren des Roboterfahrzeuges bewegt werden und dabei eine Wegstrecke zwischen einem ersten Ort und einem zweiten Ort zurücklegen. Der Raupenantrieb des Roboterfahrzeuges bringt dabei den Vorteil mit sich, dass auch größere Steigungen überwunden werden können, wenn das Lastaufnahmemittel durch das Stückgut schwer bestückt ist und beispielsweise eine Last von mehr als 200 kg, insbesondere mehr als 400 kg, beispielsweise 600 kg, oder mehr trägt. Durch die gelenkige Anbindung der Transporteinrichtung über die Verbindung durch die Adaptereinrichtung mit der Aufnahme kann das Roboterfahrzeug über ein Hindernis wie eine Bodenunebenheit fahren und wird dabei in Bezug auf die Transporteinrichtung gekippt. Die Transporteinrichtung kann je nach Gegebenheiten unverändert weiterbewegt werden, beispielsweise wenn sich ein Hindernis bloß im Bereich des Roboterfahrzeuges befindet.

Eine Kopplung der Adaptereinrichtung mit der Aufnahme erfolgt autonom. Das Roboterfahrzeug kann hierfür geeignete Sensoren aufweisen, beispielsweise Sensoren zur Bilderkennung. Dabei kann eine Kontur der Aufnahme an der Transporteinrichtung in einer Datenverarbeitungseinrichtung des Roboterfahrzeuges hinterlegt sein, sodass die Aufnahme vom Roboterfahrzeug erkannt wird und das Roboterfahrzeug selbsttätig in eine korrekte Position für eine Kopplung der Adaptereinrichtung mit der Aufnahme fahren kann. Die Adaptereinrichtung kann hierfür einfach aufgebaut sein, beispielsweise als sich senkrecht von einer Basis des Roboterfahrzeuges, beispielsweise einer Aufnahmeplatte, erstreckendes stabförmiges Element mit einem endseitigen kugelförmigen Ansatz. Dieser kugelförmige Ansatz kann in eine korrespondierende schalenförmige Aufnahme der Transporteinrichtung eingreifen, ähnlich wie dies bei einer Anhängerkupplung eines Kraftfahrzeuges der Fall ist. Es können auch Verriegelungselemente vorgesehen sein, die über das Roboterfahrzeug nach Ankopplung der Transporteinrichtung insbesondere automatisiert verriegeln, sodass ein Lösen der Adaptereinrichtung aus der Aufnahme während eines Transportes verhindert ist. Grundsätzlich können Verriegelungselemente auch an der Transporteinrichtung angeordnet sein, bevorzugt ist es jedoch, dass diese abgesehen von der Aufnahme für die Adaptereinrichtung im Wesentlichen entsprechend dem Stand der Technik ausgebildet ist und keine Steuerungs- und/oder Regelungselemente umfasst, somit eine lediglich passive Einheit darstellt, welche vom Roboterfahrzeug und nur auf Basis dessen Steuerung verfahren wird.

Bevorzugt ist vorgesehen, dass die Aufnahme die Adaptereinrichtung formschlüssig aufnimmt. Gleichwohl ist gleichzeitig die Verbindung gelenkig, erlaubt also eine insbesondere automatische Einstellung eines Winkels einer Fahrebene des Roboterfahrzeuges relativ zu einer Fahrebene der Transporteinrichtung. Ein maximaler Winkel wird durch die Kombination der Aufnahme mit der Adaptereinrichtung festgelegt bzw. bestimmt. Maximalwinkel können beispielsweise auf 60° eingestellt werden.

Die Adaptereinrichtung weist bevorzugt ein Kugelgelenk auf, um die gelenkige Verbindung mit der Aufnahme zu ermöglichen. Die Aufnahme ist hierzu korrespondierend ausgebildet. Eine Kopplung der Adaptereinrichtung mit der Aufnahme kann durch einen Steuerbefehl erfolgen, welcher durch das Roboterfahrzeug erfolgt. Der Steuerbefehl kann durch ein Computerprogramm gegeben werden, welches dazu eingerichtet ist, den Steuerbefehl dann zu geben, wenn das Roboterfahrzeug in einer geeigneten Position ist, um die Adaptereinrichtung mit der Aufnahme zu koppeln. Dies ermöglicht ein autonomes Bewegen von Lasten, da die Transporteinrichtung automatisiert mit dem Roboterfahrzeug von einem ersten Ort zu einem zweiten Ort transportiert werden kann. Das Computerprogramm ist am Roboterfahrzeug gespeichert und/oder von diesem vorzugsweise automatisch aktivierbar. Ein Fahrweg des Roboterfahrzeuges wird entweder vorgegeben, beispielsweise mit QR-Codes oder über RFID-tags. Dies erlaubt eine ausreichend genaue Positionierung bzw. ein ausreichend genaues Verfahren in einer Produktionshalle. Alternativ ist es auch möglich, dass das Roboterfahrzeug mit einer VSLAM (visual simultanenous localization and mapping)-Einheit ausgestattet ist, welche ein autonomes Fahren in einer Produktionshalle ermöglicht. Das Roboterfahrzeug kann über eine Funkverbindung, insbesondere WLAN, mit einer Datenverarbeitungsanlage verbunden sein, mit welcher eine Steuerung der Aktionen des Roboterfahrzeuges erfolgt. Diese Steuerung kann insbesondere auf einen Produktionsprozess abgestimmt sein. Dabei kann eine Vielzahl von Roboterfahrzeugen zusammen mit einer Vielzahl von Transporteinrichtungen zum Einsatz kommen, sodass auch eine Prozessoptimierung möglich ist.

Die Adaptereinrichtung ist bevorzugt kopfseitig am Roboterfahrzeug bzw. an einer Oberseite des Roboterfahrzeuges angeordnet. Dies bringt den Vorteil, dass das Roboterfahrzeug unterhalb der Transporteinrichtung positioniert werden kann. Dies wiederum führt dazu, dass ein Schwerpunkt des gesamten Sets günstig liegt, was sich für einen Transport als vorteilhaft erweist. Das Roboterfahrzeug ist günstigerweise mit einer Höhe von weniger als 50 cm, insbesondere weniger als 40 cm, beispielsweise 35 cm oder weniger, ausgebildet.

Die Transporteinrichtung kann eine Vielzahl von Rädern aufweisen. Bevorzugt weist die Transporteinrichtung zumindest drei Räder auf, vorzugsweise vier Räder. Sind vier Räder vorgesehen, können diese paarweise angeordnet sein, insbesondere zwei Räder an einer Stirnseite der Transporteinrichtung und zwei Räder an einer Rückseite der Transporteinrichtung. Die Räder sind allesamt bodenseitig montiert. Sind zwei Paare von Rädern vorgesehen, verlaufen Achsen der Radpaare zweckmäßigerweise parallel zueinander. Besonders günstig ist es dabei, wenn zumindest ein Paar Räder in Bezug auf eine Vertikalebene schwenk- oder drehbar angeordnet sind. Dieses Paar Räder kann sich somit um eine Radachse und damit in Transportrichtung bewegen, lässt sich aber auch um eine Vertikalachse schwenken oder drehen. Das weitere Paar Räder, insbesondere ein hinteres Paar Räder, kann in Bezug auf eine Vertikalebene ebenfalls schwenkbar, insbesondere drehbar, angeordnet sein. Dadurch kann die Transporteinrichtung, welche beim Transport mit den Rädern ebenso wie der Raupenantrieb des Roboterfahrzeuges an einer Fahrbahnoberfläche anliegt, den Bewegungen des Roboterfahrzeuges leicht folgen. Dadurch ist auch ein Schwenken im Stand möglich, insbesondere ein Drehen um 360°.

Das Roboterfahrzeug kann aufgrund des Raupenantriebes Hindernisse ohne Weiteres überwinden. Um auch Hindernisse überwinden zu können, welche sich im Weg für die in der Regel wesentlich breiter ausgeführte Transporteinrichtung befinden, ist mit Vorteil vorgesehen, dass ein Teil der Räder, vorzugsweise alle Räder, der Transporteinrichtung als Dreiroller ausgebildet sind. Die Dreiroller erlauben es, dass auch die Transporteinrichtung Stufen bestimmter Höhe überwindet. Somit kann das Set insgesamt nicht nur Steigungen, sondern auch Hindernisse wie Stufen oder dergleichen überwinden. Eine alternative Variante der Räder ist durch ausreichend groß dimensionierte Luftreifen gegeben, welche ebenfalls eingesetzt werden können.

Bevorzugt ist vorgesehen, dass die Transporteinrichtung an einer Unterseite seitliche Führungen aufweist, an welchen das Roboterfahrzeug in einem verbundenen Zustand zur Anlage kommen kann. Ist das Roboterfahrzeug mit der Transporteinrichtung gelenkig verbunden und folgen die Räder der Transporteinrichtung einer Richtungsänderung des Roboterfahrzeuges nicht schnell genug, kommt das Roboterfahrzeug an den seitlichen Führungen zur Anlage und dreht dadurch die Transporteinrichtung mit. Wenn die Räder um eine Vertikalachse drehbar sind, ist es dadurch auch möglich, die Transporteinrichtung am Stand zu drehen. Die Transporteinrichtung kann in diesem Fall für ein Beladen und Entladen optimal platziert werden. Die seitlichen Führungen sind bevorzugt länglich ausgebildet. Die seitlichen Führungen können ident ausgebildet sein. Die seitlichen Führungen können nach außen weisende, vorzugsweise gebogene, Enden aufweisen, um ein Unterfahren der Transporteinrichtung durch das Roboterfahrzeug zu erleichtern. Eine Länge der seitlichen Führungen und/oder deren Höhe von der Unterseite der Transporteinrichtung nach unten und damit zum Roboterfahrzeug hin, ist so abgestimmt, dass das Roboterfahrzeug bei Schwenken am Boden um eine Vertikalachse um einen vorbestimmten Winkel von zum Beispiel mehr als 5° oder 10° an den seitlichen Führungen zur Anlage kommt, wenn die Transporteinrichtung einer Fahrtrichtung des Roboterfahrzeuges nicht automatisch oder schnell genug folgt. Durch das Zusammenspiel des Roboterfahrzeuges mit den seitlichen Führungen der Transporteinrichtung erfolgt somit eine Zwangsführung der Transporteinrichtung in Bezug auf einen zurückzulegende Fahrtstrecke.

Die Adaptereinrichtung kann eine Höhenausgleichseinrichtung für eine Höhenanpassung entlang einer z-Achse aufweisen. Dies erlaubt eine exakte Positionierung der Adaptereinrichtung bei einer Kopplung der Adaptereinrichtung mit der Transporteinrichtung, was wiederum einen Verschleiß der zu koppelnden Teile reduziert.

Ein erfindungsgemäßes Set wird insbesondere in Anlagen zur Herstellung von Drahtprodukten eingesetzt. Das Set ist dabei in der Lage, mit den relativ rauen Produktionsbedingungen, unsauberen Produktionsstätten und unebenen Fahrbahnen zurechtzukommen.

Weitere Merkmale, Vorteile und Wirkungen der Erfindung ergeben sich aus den nachfolgend dargestellten Ausführungsbeispielen. In den Zeichnungen, auf welche dabei Bezug genommen wird, zeigen:
Fig. 1 ein Roboterfahrzeug;
Fig. 2 eine Transporteinrichtung zum Transport von Bewehrungsbügeln;
Fig. 3 ein erfindungsgemäßes Set;
Fig. 4 eine perspektivische Darstellung eines erfindungsgemäßen Sets;
Fig. 5 Ausschnitte aus einem Bewegungsablauf beim Passieren eines Hindernisses mit einem erfindungsgemäßen Set.

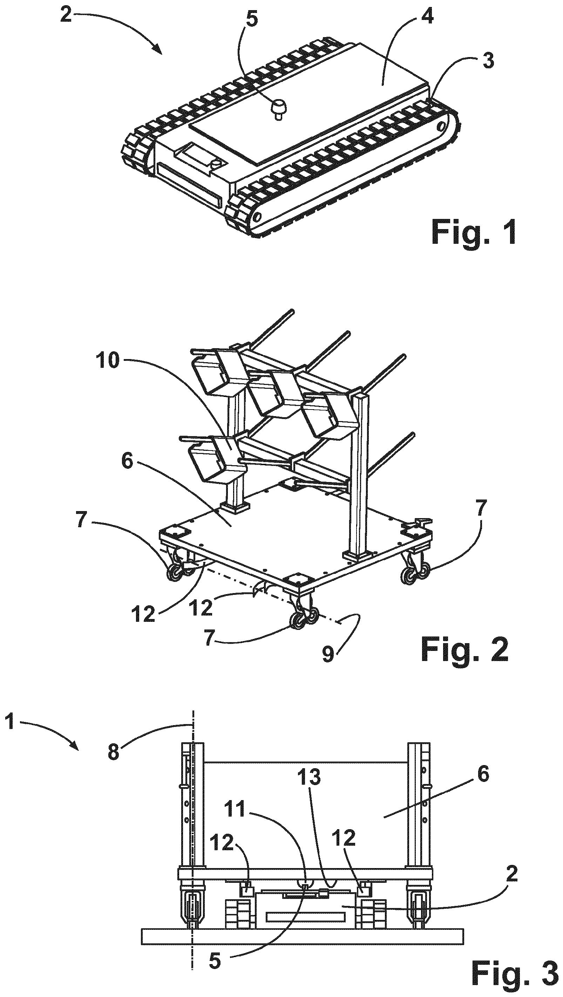

In Fig. 1 ist ein Roboterfahrzeug 2 dargestellt. Das Roboterfahrzeug 2 weist einen Raupenantrieb 3 auf. Kopfseitig ist am Roboterfahrzeug 2 eine Adapterplatte 4 montiert. Die Adapterplatte 4 trägt eine Adaptereinrichtung 5. Die Adaptereinrichtung 5 ist länglich bzw. stabförmig aufgebaut und weist endseitig, an deren höchsten Stelle, eine Koppeleinheit auf, welche in eine Aufnahme 11 einer Transporteinrichtung 6 einbringbar ist.

In Fig. 2 ist eine Transporteinrichtung 6 dargestellt, die zum Transport von Stückgut 10 wie Bewehrungskörben, die in einer Produktionshalle erstellt werden, ausgelegt ist. Die Transporteinrichtung 6 weist bodenseitig vier Räder 7 auf, und zwar ein stirnseitiges Paar an Rädern 7 sowie ein rückseitig angeordnetes Paar an Rädern 7.

In Fig. 3 ist ein erfindungsgemäßes Set 1 dargestellt, umfassend ein Roboterfahrzeug 2 und eine Transporteinrichtung 6. Das Roboterfahrzeug 2 ist mit einer Höhe ausgebildet, welche es erlaubt, das Roboterfahrzeug 2 unterhalb der Transporteinrichtung 6 zu positionieren, wie dies in Fig. 3 dargestellt ist. Über die höhenverstellbare Adaptereinrichtung 5 kann das Roboterfahrzeug 2 mit der Transporteinrichtung 6 gekoppelt werden. Anders ausgedrückt nimmt durch die Kopplung das Roboterfahrzeug 2 die nicht selbstfahrende Transporteinrichtung 6 mit. Der Raupenantrieb 3 sorgt dafür, dass dies auch dann möglich ist, wenn beispielsweise entsprechend Fig. 2, eine Transporteinrichtung 6 sehr schwere Stückgüter 10 trägt und beispielsweise ein Gesamtgewicht (Transporteinrichtung 6 samt Stückgut 10) von mehreren 100 kg aufweist. Ein vorderes Paar an Rädern 7 ist bei der Transporteinrichtung 6 in Bezug auf eine Vertikalebene 8 drehbar angeordnet. Dies bedeutet, die Räder 7 drehen sich beim Fahren um deren Drehachse 9 und können auch aus der Vertikalebene 8 ausgelenkt werden. Ein hinteres Paar von Rädern 7 ist derart entsprechend an einer Unterseite 13 der Transporteinrichtung 6 angeordnet, dass sich diese Räder 7 ebenfalls nicht nur um die Drehachse 9 dieser Räder 7, sondern auch um eine durch die Vertikalebene 8 verlaufende Vertikalachse drehen können. Somit ist das erste Paar an Rädern 7 in Transportrichtung ebenso wie das zweite Paar an Rädern 7 schwenkbar oder drehbar, sodass die Transporteinrichtung 6 mit dem Roboterfahrzeug 2 einfach manövriert werden kann. An der Unterseite 13 sind für ein Zusammenspiel von Roboterfahrzeug 2 und Transporteinrichtung 6 zusätzlich seitliche Führungen 12 vorgesehen, welche eine Höhe derart aufweisen, dass das Roboterfahrzeug 2 bei einer Schwenkbewegung am Boden an diesen seitlichen Führungen 12 zur Anlage kommen kann, wodurch die Transporteinrichtung 6 mitgedreht werden kann. Auch ein Drehen im Stand um 360° ist damit möglich.

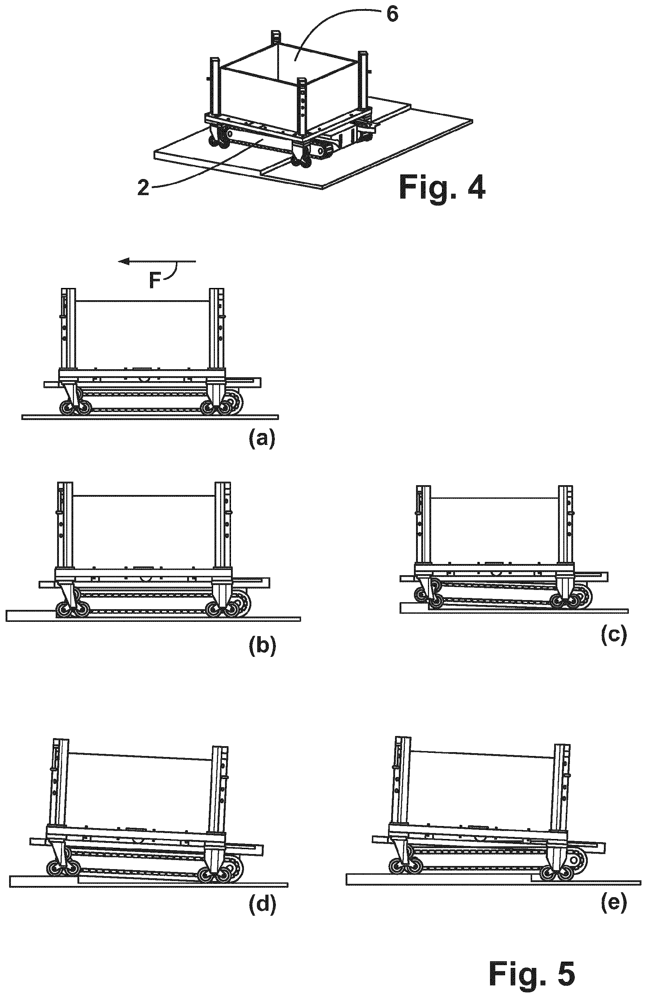

Fig. 4 zeigt eine perspektivische Darstellung einer Transporteinrichtung 6, welche einen Behälter trägt, der beispielsweise Drahtbügel oder dergleichen aufnehmen kann. Die Transporteinrichtung 6 ist mit einem Roboterfahrzeug 2 verbunden. In Fig. 5 sind Bewegungsabläufe gezeigt, wenn das Set 1 aus Roboterfahrzeug 2 und Transporteinrichtung 6 auf ein Hindernis wie eine Stufe stößt. Wie ersichtlich ist, kann das Roboterfahrzeug 2 aufgrund des Raupenantriebes 3 ohne Weiteres die Stufe überwinden und kann dabei gegenüber der Transporteinrichtung 6 aufgrund der gelenkigen Anbindung die Adaptereinrichtung 5 an die Aufnahme 11 gekippt werden. Die Transporteinrichtung 6 wiederum kann der Bewegung des Roboterfahrzeuges 2 folgen und kann aufgrund der Ausbildung der Räder 7 als Dreiroller das Hindernis ebenfalls passieren.

## Patentansprüche

1. Set (1) aus einem Roboterfahrzeug (2), welches für einen autonomen Betrieb eingerichtet ist, und einer verfahrbaren Transporteinrichtung (6) zum Transportieren von Lasten wie Stückgut (10), **dadurch gekennzeichnet, dass** das Roboterfahrzeug (2) mit einem Raupenantrieb (3) ausgebildet ist und eine Adaptereinrichtung (5) für die Transporteinrichtung (6) aufweist und die Transporteinrichtung (6) mit einer bodenseitigen Aufnahme (11) für die Adaptereinrichtung (5) ausgebildet ist, wobei die Aufnahme (11) dazu eingerichtet ist, die Adaptereinrichtung (5) gelenkig aufzunehmen.

2. Set (1) nach Anspruch 1, **dadurch gekennzeichnet, dass** die Aufnahme (11) die Adaptereinrichtung (5) formschlüssig aufnimmt.

3. Set (1) nach Anspruch 1 oder 2, **dadurch gekennzeichnet, dass** die Adaptereinrichtung (5) ein Kugelgelenk umfasst.

4. Set (1) nach einem der Ansprüche 1 bis 3, **dadurch gekennzeichnet, dass** die Adaptereinrichtung (5) kopfseitig am Roboterfahrzeug (2) angeordnet ist.

5. Set (1) nach einem der Ansprüche 1 bis 4, **dadurch gekennzeichnet, dass** das Roboterfahrzeug (2) unter der Transporteinrichtung (6) positionierbar ist, insbesondere vollständig unter der Transporteinrichtung (6) positionierbar ist.

6. Set (1) nach einem der Ansprüche 1 bis 5, **dadurch gekennzeichnet, dass** die Transporteinrichtung (6) eine Vielzahl von Rädern (7) aufweist.

7. Set (1) nach Anspruch 6, **dadurch gekennzeichnet, dass** die Transporteinrichtung (6) ein, insbesondere vorderes, Paar Räder (7) aufweist, welche in Bezug auf eine Vertikalebene (8) schwenkbar, insbesondere drehbar, angeordnet sind.

8. Set (1) nach Anspruch 6 oder 7, **dadurch gekennzeichnet, dass** die Transporteinrichtung (6) ein, insbesondere hinteres, Paar Räder (7) aufweist, welche in Bezug auf eine Vertikalebene (8) schwenkbar, insbesondere drehbar, angeordnet sind.

9. Set (1) nach einem der Ansprüche 6 bis 8, **dadurch gekennzeichnet, dass** zumindest ein Teil der Räder (7), vorzugsweise alle Räder (7), der Transporteinrichtung (6) als Dreiroller ausgebildet sind.

10. Set (1) nach einem der Ansprüche 1 bis 9, **dadurch gekennzeichnet, dass** die Transporteinrichtung (6) an einer Unterseite (13) seitliche Führungen (12) aufweist, an welchen das Roboterfahrzeug (2) in einem verbundenen Zustand zur Anlage kommen kann.

11. Set (1) nach Anspruch 10, **dadurch gekennzeichnet, dass** die seitlichen Führungen (12) länglich ausgebildet sind.

12. Set (1) nach einem der Ansprüche 1 bis 11, **dadurch gekennzeichnet, dass** die Adaptereinrichtung (5) eine Höhenausgleichseinrichtung für eine Höhenanpassung entlang einer z-Achse aufweist.

13. Anlage zur Herstellung von Produkten wie Drahtprodukten, insbesondere Bewehrungselementen wie Gittermatten oder Bewehrungsbügel, umfassend zumindest ein Set (1) nach einem der Ansprüche 1 bis 12.
